# NEUE EUROPÄISCHE PATENTSCHRIFT

(11) **EP 0 538 571 B2**
(45) Veröffentlichungstag und Bekanntmachung des Hinweises auf die Entscheidung über den Einspruch: **12.12.2001**
(45) Hinweis auf die Patenterteilung: 25.09.1996
(21) Anmeldenummer: 92113798.0
(22) Anmeldetag: 13.08.1992
(51) Int. Cl.: C08F 2/30

(54) **Verfahren zur Herstellung von schutzkolloidstabilisierten, emulgatorfreien, wässrigen Kunststoffdispersionen**
Process for preparing aqueous dispersions of synthetic materials without emulsifying agents stabilised with a protective colloid
Procédé de préparation de dispersions aqueuses de matières synthétiques sans émulsifiant stabilisés par un colloide protecteur

(30) Priorität: 19.10.1991 DE 4134672
(43) Veröffentlichungstag der Anmeldung: 28.04.1993
(73) Patentinhaber: Degussa AG, 40474 Düsseldorf (DE)
(72) Erfinder: Hesterwerth, Dieter, Dr., W-4421 Reken (DE); Sauer, Thomas, Dr., W-4358 Haltern (DE)

(56) Entgegenhaltungen:
- EP-A- 0 062 106
- EP-A- 0 070 355
- JP-A- 58 162 611
- JP-A- 62 288 668
- JP-B- 6 019 057
- US-A- 4 670 505
- Römpps Chemie Lexikon, 8. Auflage, Stuttgart 1979, S. 191

## Beschreibung

Verfahren zur Herstellung von schutzkolloidstabilisierten, emulgatorfreien, wäßrigen Kunststoffdispersionen, welche auch als sterisch stabilisierte Dispersionen (sterically stabilised dispersions) bezeichnet werden, sind seit langem bekannt.

So ist ein Verfahren zur Herstellung von stabilen Kunststoffdispersionen aus ≥ 50 Massen-% Vinylacetat und ≤ 50 Massen-% (Meth)acrylat, bezogen auf die gesamten Monomeren, durch semikontinuierliche Polymerisation der Monomeren in wäßriger Phase als Dispersionsmedium in Gegenwart eines wasserlöslichen Schutzkolloids (steric stabiliser) und eines radikalischen Initiators oder eines aus einem radikalischen Initiator und einem wasserlöslichen Reduktionsmittel bestehenden Initiatorsystems bekannt. Die Polymerisation wird in Monomerzulauffahrweise durchgeführt, wobei die gesamte Schutzkolloidmenge in die Vorlage gegeben wird. Als Schutzkolloid sind Polyvinylalkohol und Hydroxyethylcellulose geeignet. Schwierigkeiten gibt es bei der Herstellung von Kunststoffdispersionen aus < 50 Massen-% Vinylacetat und > 50 Massen-% (Meth)acrylat, da die Viskosität während der Polymerisation extrem ansteigt (US-A-4 670 505, Spalte 1).

In der GB-A-1 278 813 wird dieses Problem dadurch gelost, daß zusätzlich zum Schutzkolloid bis zu 10, vorzugsweise bis zu 5 Massen-%, bezogen auf die gesamten Monomeren, eines stabilisierenden Hilfsmittels (emulsion stabiliser), wie Allylalkohol, Propanol oder Propylenglykol, eingesetzt wird. Durch diese Hilfsmittel können die anwendungstechnischen Eigenschaften, wie beispfelsweise die Filmbildung der Dispersion, negativ beeinflußt werden. Der Allylalkohol ist darüberhinaus toxisch.

In der EP-A-0 013 478 (siehe Patentanspruch 10 und Beispiel 22) wird das eingangs geschilderte Problem dadurch gelöst, daß zusätzlich zum Schutzkolloid 30 bis 70 Massen-%, bezogen auf die wäßrige Phase, eines mit Wasser mischbaren, organischen Lösemittels, wie Methanol oder Ethanol, eingesetzt wird. Das Schutzkolloid wird beispielsweise durch Pfropfung von im wesentlichen nicht wasserlöslichen, radikalisch polymerisierbaren, ethylenisch ungesättigten Monomeren, wie Methylmethacrylat und 2-Ethylhexylacrylat, auf Polyvinylalkohol in Gegenwart eines radikalischen Initiators in einer Vorstufe zur Polymerisation in situ gebildet. Das Wasser/Lösemittel-Gemisch soll die zu polymerisierenden Monomeren lösen. Das Lösemittel ist nach der Polymerisation destillativ abzutrennen.

In der US-A-4 670 505 wird das eingangs geschilderte Problem dadurch gelöst, daß zusätzlich zum Schutzkolloid bis zu 5 Massen-%, bezogen auf die gesamten Monomeren, einer niedermolekularen, wasserlöslichen Aminoalkoholverbindung eingesetzt wird. Diese wirkt als Radikalüberträger bei der Pfropfung der Monomeren auf das Schutzkolloid (chain transfer agent) und somit als Viskositätsregler. Die Aminoalkoholverbindung ist entweder oberflächenaktiv und wirkt dann wie ein Emulgator oder sie ist nicht oberflächenaktiv. In diesem Fall wird zusätzlich ein Emulgator eingesetzt. Emulgatoren sind bei vielen Anwendungen unerwünscht, da sie beispielsweise die Filmbildung negativ beeinflussen.

In der EP-A-0 062 106 wird das eingangs geschilderte Problem dadurch gelöst, daß nur ein Teil des als Schutzkolloid eingesetzten Polyvinylalkohols in die Vorlage gegeben wird und der Rest zusammen mit den Monomeren in einer "Voremulsion" während der Polymerisation dosiert wird oder die gesamte Polyvinylalkoholmenge zusammen mit den Monomeren in der Voremulsion dosiert wird. Die Herstellung und Dosierung der Voremulsion ist technisch aufwendig.

Die Aufgabe der Erfindung besteht darin, ein Verfahren zur Herstellung von schutzkolloidstabilisierten, emulgatorfreien, wäßrigen Kunststoffdispersionen bereitzustellen, welches die Nachteile des geschilderten Standes der Technik überwindet. Das Verfahren soll es ermöglichen, die Hydrophilie, die Viskosität und den Restmonomergehalt der Dispersionen gezielt einzustellen. Insbesondere sollen Dispersionen mit den folgenden Eigenschaftskombinationen bereitgestellt werden.

Gruppe I: Niedrige Hydrophilie, charakterisiert durch Filme, die unter Standardbedingungen nicht redispergieren. Hohe Viskosität. Die Dispersionen weisen vorzugsweise einen sehr niedrigen Restmonomergehalt auf.

Gruppe II: Hohe Hydrophilie, charakterisiert durch Filme, die unter Standardbedingungen redispergieren. Vorzugsweise niedrige Viskosität (beispielsweise 1 000 mPa s), so daß die Dispersionen durch Sprühtrocknung in Pulver überführt werden können. Diese redispergieren leicht in Wasser. Die Dispersionen weisen vorzugsweise einen sehr niedrigen Restmonomergehalt auf.

Die Aufgabe wurde in überraschender Weise wie in den Patentansprüchen angegeben gelöst.

Der Gegenstand der Erfindung ist somit ein Verfahren zur Herstellung von schutzkolloidstabilisierten, emulgatorfreien, wäßrigen Kunststoffdispersionen auf Basis von > 50 Massen-% Styrol und/oder (C₁- bis C₈-Alkyl)(meth)acrylat, bezogen auf die gesamten Monomeren, durch semikontinuierliche Polymerisation der Monomeren in wäßriger Phase als Dispersionsmedium in Gegenwart eines wasserlöslichen Polyvinylalkohols, welche durch Verseifung von Polyvinylacetat erhalten werden, einen polymerisationsgrad im Bereich von 200 bis 2000 (Monomereinheiten im Polymermolekül) und einen Hydrolysegrad von 74 bis 99,5 % aufweisen, als Schutzkolloid und eines radikalischen Initiators oder eines aus einem radikalischen Initiator und einem wasserlöslichen Reduktionsmittel bestehenden Initiatorsystems. Die Polymerisation wird in Monomerzulauffahrweise durchgeführt, wobei die gesamte Polyvinylalkoholmenge in die Vorlage gegeben wird.,

Die Hydrophilie und Viskosität werden derart gesteuert, daß
a) Dispersionen mit niedriger Hydrophilie mittels eines Initiatorsystems bestehend aus einem monomerlöslichen (Hydro)peroxid und einem Reduktionsmittel,
   oder daß
b) Dispersionen mit hoher Hydrophilie allein mittels eines Initiators aus der Gruppe der Peroxodisulfate oder in Kombination mit einem Initiätorsystem bestehend aus einem monomerlöslichen (Hydro)peroxid und einem Reduktionsmittel hergestellt werden.

Weitere Monomere, die bei der Herstellung der Kunststoffdispersionen eingesetzt werden können, sind Vinylester, wie beispielsweise Vinylacetat, Vinylpropionat und die Vinylester handelsüblicher, α-verzweigter (tertiärer) C₉/C₁₀-Carbonsäuren, acyclische, konjugierte Diolefine, wie beispielsweise 1,3-Butadien und Isopren, α, β-monoethylenisch ungesättigte Carbonsäuren, wie beispielsweise (Meth)acrylsäure, Maleinsäure, Fumarsäure und Itaconsäura und deren Amide, wie beispielsweise (Meth)acrylamid sowie die Mono- und Diester der Dicarbonsäuren, wie beispielsweise Maleinsäuremono- und Maleinsäuredi-n-butylester.

Die konjugierten Diolefine werden in der Regel in einer Menge von < 45, vorzugsweise ≤ 40 Massen-%, bezogen auf die gesamten Monomeren, eingesetzt. Die α, β-monoethylenisch ungesättigten Carbonsäuren und deren Amide sowie die Mono- und Diester der Dicarbonsäuren werden in der Regel in einer Menge von < 10, vorzugsweise < 5 Massen-%, bezogen auf die gesamten Monomeren, eingesetzt.

Das Monomer/Wasser-Verhältnis wird in der Regel so eingestellt, daß ein Feststoffgehalt der fertigen Dispersion von 30 bis 70 Massen-% resultiert.

Die wasserlöslichen Polyvinylalkohole, welche durch Verseifung von Polyvinylacetat erhalten werden, weisen einen Polymerisationsgrad im Bereich von 200 bis 2 000 (Monomereinheiten im Polymermolekül) und einen Hydrolysegrad im Bereich von 74 bis 99,5 % auf. Sie werden in der Regel in einer Menge von 1 bis 20, vorzugsweise > 2,5 bis 10 Massen-%, bezogen auf die gesamten Monomeren, eingesetzt.

Die radikalischen Initiatoren sind entweder wasserlöslich oder im wesentlichen nicht wasserlöslich und dann monomerlöslich.

Geeignete wasserlösliche Initiatoren sind Natrium, Kalium- und Ammoniumperoxodisulfat.

Geeignete monomerlösliche Initiatoren sind organische Hydroperoxide; wie beispielsweise Tertiärbutylhydroperoxid,Pinanhydroperoxid, p-Menthanhydroperoxid, Cumolhydroperoxid und Diisopropylphenylhydroperoxid, organische Peroxide, wie beispielsweise Dibenzoylperoxid, Dilaurylperoxid und Diacetylperoxid und monomerlösliche Azoverbindungen, wie beispielsweise Azoisobutyronitril. Bevörzugt ist Tertiärbutylhydroperoxid.

Die Initiatoren oder Initiatorkombinationen werden in der Regel in einer Menge von 0,01 bis 2 Massen-%, bezogen auf die gesamten Monomeren, eingesetzt.

Die wasserlöslichen Reduktionsmittel wirken als Aktivatoren für die Initiatoren. Geeignete Reduktionsmittel sind Ascorbinsäure, Natrium-, Kalium- und Ammoniumsulfit und -bisulfit und Natriumformaldehydsulfoxylat. Sie können in Kombination mit einem Schwermetallsalz eingesetzt werden.

Die Reduktionsmittel werden in der Regel in einer Menge von 0,01 bis 2 Massen-%, bezogen auf die gesamten Monomeren, eingesetzt. Sie werden in der Regel während der.Polymerisation dosiert.

Ein weiterer Gegenstand der Erfindung ist ein Verfahren mit den Merkmalen des oben diskutierten Patentanspruchs 1 und dem zusätzlichen Merkmal, daß die Polymerisation zusätzlich in Gegenwart eines wasserlöslichen Viskositätsreglers durchgeführt wird. Dabei sind die stabilisierenden Hilfsmittel der GB-PS 1 278 813, die sogenannten emulsion stabilisers, wie immer diese im einzelnen auch wirken mögen, als Zusätze ausgeschlossen (Patentanspruch 2).

Der wasserlösliche Viskositätsregler wirkt als Radikalüberträger bei der Pfropfung der Monomeren auf den Polyvinylalkohol. Geeignete Viskositätsregler sind niedermolekulare, organische Schwefelverbindungen, wie beispielsweise Thioglykolsäure, und niedermolekulare, nicht oberflächenaktive Aminoalkoholverbindungen, wie beispielsweise Triethanolamin. Bevorzugt ist Triethanolamin (Patentanspruch 3).

Der Viskositätsregler wird in der Regel in einer Menge von 0,01 bis 2 Massen-%, bezogen auf die gesamten Monomeren, eingesetzt. Er wird in die Vorlage gegeben.

Die Polymerisation wird in der Regel bei 40 bis 90, vorzugsweise bei 50 bis 80 °C durchgeführt.

Die Polymerisation wird in Monomerzulauffahrweise durchgeführt, wobei die gesamte Polyvinylalkoholmenge in die Vorlage gegeben wird. Die Monomeren werden während der Polymerisation dosiert. Ein Teil der Monomeren, beispielsweise die gesamte (Meth)acrylamidmenge, kann in die Vorlage gegeben werden. Es kann auch ein Teil des Monomerengemisches in die Vorlage gegeben und in Batchfahrweise unter Erzeugung eines Saatlatex polymerisiert werden. Anschließend erfolgt dann die Polymerisation in Monomerzulauffahrweise. Die Viskosität der Dispersionen kann u. a. durch die Dosierzeit der Monomeren gesteuert werden.

Eine bevorzugte Ausführungsform des Verfahrens besteht darin, daß die Polymerisation in Gegenwart eines Peroxodisulfats und eines Viskositätsreglers durchgeführt wird. Das Peroxodisulfat kann vorgelegt oder während der Polymerisation dosiert werden. Durch diese Vorgehensweise können Dispersionen der Gruppe II erhalten werden.

Eine besonders bevorzugte Ausführungsform des Verfahrens besteht darin, daß die Polymerisation in Gegenwart eines aus einem organischen, monomerlöslichen (Hydro)peroxid und einem Reduktionsmittel bestehenden Initiatorsystems durchgeführt wird. Das (Hydro)peroxid wird in der Regel vorgelegt. Durch diese Vorgehensweise können Dispersionen der Gruppe I erhalten werden.

Eine weitere, besonders bevorzugte Ausführungsform des Verfahrens besteht darin, daß die Polymerisation in Gegenwart eines aus einem organischen, monomerlöslichen (Hydro)peroxid, einem Peroxodisulfat und einem Reduktionsmittel bestehenden Initiatorsystems durchgeführt wird. Das (Hydro)peroxid wird in der Regel vorgelegt. Durch diese Vorgehensweise können Dispersionen der Gruppe II erhalten werden.

Dispersionen der Gruppe I werden vorzugsweise durch Polymerisation der Monomeren in Gegenwart eines aus Tertiärbutylhydroperoxid und einem Reduktionsmittel bestehenden Initiatorsystems erhalten.

Dispersionen der Gruppe II werden vorzugsweise durch Polymerisation der Monomeren in Gegenwart eines aus Tertiärbutylhydroperoxid, einem Peroxodisulfat und einem Reduktionsmittel bestehenden Initiatorsystems erhalten.

Im Hinblick auf den gewünschten, sehr niedrigen Restmonomergehalt der Dispersionen der Gruppen I und II werden im Falle der beiden besonders bevorzugten Ausführungsformen die Initiator/Reduktionsmittel-Mengen hoch, die Polymerisationstemperatur niedrig (beispielsweise auf 60 °C) und die Polymerisationszeit hoch (beispielsweise 8 h Polymerisation + 2 h Nachpolymerisation) eingestellt.

Die Dispersionen der Erfindung eignen sich als Bindemittel in Dispersionsfarben und in hydraulisch abbindenden Mörteln.

Die Erfindung wird durch die folgenden Beispiele erläutert. Darin bedeuten Teile (T.) Massenteile und Prozent (%) Massenprozent.

In den Beispielen wurde ein Polyvinylalkohol (PVA) mit dem Polymerisationsgrad 400, dem Hydrolysegrad 86 bis 89 % (Molprozent, bezogen auf die Acetateinheiten des zur Hydrolyse eingesetzten Polyvinylacetats) und der Viskosität 4 mPa·s, gemessen nach Höppler in vierprozentiger, wäßriger Lösung bei 20 °C, eingesetzt.

Die eingesetzten Monomere waren Styrol, n-Butylacrylat (BA) und Acrylamid.

Die Viskosität der fertigen Dispersionen wurde mit einem Brookfield-Viskosimeter (Spindel 3, 30 Upm 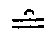 30 min⁻¹) bei Raumtemperatur gemessen.

Die Wasserfestigkeit wurde in einem einfachen Test bestimmt. Mit einem Rakel wurde ein Dispersionsfilm der Dicke 200 µm auf eine Glasplatte aufgetragen. Nach eintägigem Trocknen wurde ein Tropfen Wasser auf den Film gegeben und das Ergebnis beurteilt.

### Herstellung von Dispersionen der Gruppe I (Beispiele 1 bis 5)

### Beispiel 1

In einem mit Dosiereinrichtungen und Temperaturregelung ausgerüsteten Polymerisationsreaktor wurden 100 T. Wasser, 0,6 T. Tertiärbutylhydroperoxid, 2,0 T. Acrylamid und 5,0 T. PVA vorgelegt. Bei 70 °C wurden ein Gemisch aus 40 T. Styrol und 60 T. BA in 3 h und eine Lösung von 0,2 T. Natriumformaldehydsulfoxylat in 10. T. Wasser in 5 h dosiert (Polymerisationszeit). Nach einer Nachpolymerisationszeit von 2 h wurde eine Dispersion mit einem Feststoffgehalt von 50,0 %, einem pH-Wert von 4,9, einer Viskosität von 9 300 mPa·s und einem Restmonomergehalt von 0,1 % erhalten. Mit der Dispersion wurde ein Film erhalten, der mit Wasser trübe wurde, aber nicht redispergierte.

### Beispiel 2

Das Beispiel 1 wurde wiederholt, jedoch wurden nur 4,0 T. PVA vorgelegt. Die erhaltene Dispersion hatte einen Feststoffgehalt von 48,9 %, einen pH-Wert von 4,8 und eine Viskosität von 3 320 mPa·s. Mit der Dispersion wurde ein Film erhalten, der mit Wasser trübe wurde, aber nicht redispergierte.

Das Beispielpaar 1 - 2 zeigt den Einfluß der PVA-Menge auf die Viskosität der Dispersion.

### Beispiel 3

Das Beispiel 1 wurde wiederholt, jedoch wurde die Polymerisation bei nur 55 °C durchgeführt. Die erhaltene Dispersion hatte einen Feststoffgehaft von 49,2 %, einen pH-Wert von 5,1, eine Viskosität von 3 280 mPa·s und einen Restmonomergehalt von 0,063 %. Mit der Dispersion wurde ein Film erhalten, der mit Wasser trübe wurde, aber nicht redispergierte.

Das Beispielpaar 1 - 3 zeigt den Einfluß der Polymerisationstemperatur auf die Viskosität der Dispersion.

### Beispiel 4

Das Beispiel 1 wurde wiederholt, jedoch wurden die Tertiärbutylhydroperoxidmenge und die Natriumformaldehydsulfoxylatmenge auf 0,8 T. bzw. 0,3 T. (gelöst in 10 T. Wasser) erhöht. Die erhaltene Dispersion hatte einen Feststoffgehalt von 49,2 %, einen pH-Wert von 4,5 und eine Viskosität von 11 000 mPa·s. Mit der Dispersion wurde ein Film erhalten, der mit Wasser trübe wurde, aber nicht redispergierte.

Das Beispielpaar 1 - 4 zeigt den Einfluß der Initiator/ Reduktionsmittel-Mengen auf die Viskosität der Dispersion.

### Beispiel 5

Das Beispiel 1 wurde wiederholt, jedoch wurden die Tertiärbutylhydroperoxidmenge und die Natriumformaldehydsulfoxylatmenge auf 0,8 T. bzw. 0,5 T. erhöht (letztere gelöst in 20 T. Wasser; entsprechend wurde die vorgelegte Wassermenge auf 90 T. vermindert), die Polymerisationstemperatur auf 60 °C erniedrigt und die Dosierzeit für das Reduktionsmittel (Polymerisationszeit) auf 8 h erhöht. Die erhaltene Dispersion hatte einen Feststoffgehalt von 49,7 %, einen pH-Wert von 3,2, eine Viskosität von 3800 mPa·s und Styrol- und BA-Restgehalte von jeweils < 10 ppm. Mit der Dispersion wurde ein Film erhalten, der mit Wassertrübe wurde, aber nicht redispergierte.

Bei Beispielpaar 1 - 5 zeigt, daß mit hohen Initiator/ Reduktionsmittel-Mengen, niedriger Polymerisationstemperatur und hoher Polymerisationszeit Dispersionen mit sehr niedrigem Restmonomergehalt erhalten werden können.

### Herstellung von Dispersionen der Gruppe II (Beispiele 6 bis 10 und 11 bis 19)

### Beispiel 6

Im Polymerisationsreaktor wurden 110 T. Wasser, 2,0 T. Acrylamid und 1,5 T. PVA vorgelegt. Bei 60 °C wurden 1,0 T. Natriumperoxodisulfat in einer Portion zugegeben und ein Gemisch aus 40 T. Styrol und 60 T. BA in 3 h dosiert (Polymerisationszeit). Nach einer Nachpolymerisationszeit von 6 h wurde eine Dispersion mit einem Feststoffgehalt von 48,8 %, einem pH-Wert von 2,7, einer Viskosität von 1 430 mPa·s und einem Restmonomergehalt von 0,92 % erhalten. Mit der Dispersion wurde ein Film erhalten, der mit Wasser redispergierte.

### Beispiel 7

Das Beispiel 6 wurde wiederholt, jedoch wurde die Polymerisationstemperatur auf 70 °C erhöht. Entsprechend wurden nur 0,3 T. Natriumperoxodisulfat in einer Portion zur Vorlage gegeben und der Rest von 0,7 T. Natriumperoxodisulfat (gelöst in 20 T. Wasser; entsprechend wurde die vorgelegte Wassermenge auf 90 T. vermindert) in 3 h dosiert. Nach einer Nachpolymerisationszeit von 2,5 h wurde eine Dispersion mit einem Feststoffgehalt von 48,8 % und einer Viskosität von 100 000 mPa·s erhalten.

Das Beispielpaar 6 - 7 zeigt den Einfluß der Polymerisationstemperatur auf die Viskosität der Dispersion.

### Beispiel 8

Das Beispiel 7 wurde wiederholt, jedoch wurde die PVA-Menge auf 1,0 T. erniedrigt. Die erhaltene Dispersion hatte einen Feststoffgehalt von 48,7 %, und eine Viskosität von 2 240 mPa·s. Mit der Dispersion wurde ein Film erhalten, der mit Wasser redispergierte.

Das Beispielpaar 7 - 8 zeigt den Einfluß der PVA-Menge auf die Viskosität der Dispersion.

### Beispiel 9

Das Beispiel 6 wurde wiederholt, jedoch wurde die PVA-Menge auf 5,0 T. erhöht. Zusätzlich wurden 0,7 T. Triethanolamin vorgelegt. Die erhaltene Dispersion hatte einen Feststoffgehalt von 47,3 %, einen pH-Wert von 2,7 und eine Viskosität von 1 120 mPa·s. Mit der Disperison wurde ein Film erhalten, der mit Wasser redispergierte.

Das Beispielpaar 6 - 9 zeigt den Einfluß des Viskositätsreglers bei erhöhter PVA-Menge auf die Viskosität der Dispersion. Bei einem Vergleichsversuch zu Beispiel 9, wobei in Abwesenheit des Viskositätsreglers polymerisiert wurde, mußte die Polymerisation nach 2,5 h wegen Verdickung abgebrochen werden.

### Beispiel 10

Das Beispiel 9 wurde wiederholt, jedoch wurde die Viskositätsreglermenge auf 0,6 T. erniedrigt. Die erhaltene Dispersion hatte einen Feststoffgehalt von 47,4%, einen pH-Wert von 2,4 und eine Viskosität von 11 600 mPa·s. Mit der Dispersion wurde ein Film erhalten, der mit Wasser redispergierte.

Das Beispielpaar 9 - 10 zeigt den Einfluß der Viskositätsreglermenge auf die Viskosität der Dispersion.

### Beispiel 11

In einem Polymerisationsreaktor wurden 80 T. Wasser, 0,6 T. Tertiärbutylhydroperoxid, 2,0 T. Acrylamid und 5,0 T. PVA vorgelegt. Bei 70 °C wurden 1,0 T. Natriumperoxodisulfat in einer Portion zugegeben und ein Gemisch aus 40 T. Styrol und 60 T. BA in 3 h und eine Lösung von 0,6 T. Natriumformaldehydsulfoxylat in 30 T. Wasser in 8 h dosiert (Polymerisationszeit). Nach einer Nachpolymerisationszeit von 2 h wurde eine Dispersion mit einem Feststoffgehalt von 49,1 %, einem pH-Wert von 3,3 und einer Viskosität von 3 680 mPa·s erhalten. Mit der Dispersion wurde ein Film erhalten, der mit Wasser redispergierte.

### Beispiel 12

Das Beispiel 11 wurde wiederholt, jedoch wurde die PVA-Menge auf 4,0 T. erniedrigt. Die erhaltene Dispersion hatte einen Feststoffgehalt von 48,9 %, einen pH-Wert von 3,2 und eine Viskosität von 1 800 mPa·s. Mit der Dispersion wurde ein Film erhalten, der mit Wasser redispergierte.

Das Beispiel 11 - 12 zeigt den Einfluß der PVA-Menge auf die Viskosität der Dispersion.

### Beispiel 13

Das Beispiel 12 wurde wiederholt, jedoch wurde die Dosierzeit der Monomeren auf 4 h erhöht. Die erhaltene Dispersion hatte einen Feststoffgehalt von 49,0 %, einen pH-Wert von 3,1 und eine Viskosität von 3 480 mPa·s. Mit der Dispersion wurde ein Film erhalten, der mit Wasser redispergierte.

Das Beispielpaar 12 - 13 zeigt den Einfluß der Dosierzeit der Monomeren auf die Viskosität der Dispersion.

### Beispiel 14

In einem Polymerisationsreaktor wurden 90 T. Wasser, 0,1 T. Natriumhydrogencarbonat, 0,8 T. Tertiärbutylhydroperoxid, 2,0 T. Acrylamid und 5,0 T. PVA vorgelegt. Bei 70 °C wurden 1,0 T. Natriumperoxodisulfat in einer Portion zugegeben und ein Gemisch aus 40 T. Styrol und 60 T. BA in 3 h und eine Lösung von 0,3 T. Natriumformaldehydsulfoxylat in 20 T. Wasser in 8 h dosiert. Nach einer Nachpolymerisationszeit von 2 h wurde eine Dispersion mit einem Feststoffgehalt von 49,1 %, einem pH-Wert von 4,3, einer Viskosität von 4 900 mPa·s und einem Restmonomergehalt von 547 ppm erhalten. Mit der Dispersion wurde ein Film erhalten, der mit Wasser redispergierte.

### Beispiel 15

Das Beispiel 14 wurde wiederholt, jedoch wurde die Polymerisationstemperatur auf 60 °C erniedrigt. Die erhaltene Dispersion hatte einen Feststoffgehalt von 49,2 %, einen pH-Wert von 5,1, eine Viskosität von 3 640 mPa·s und einen Restmonomergehalt von 120 ppm. Mit der Dispersion wurde ein Film erhalten, der mit Wasser redispergierte.

Das Beispielpaar 14 - 15 zeigt den Einfluß der Polymerisationstemperatur auf die Viskosität und den Restmonomergehalt der Dispersion.

### Beispiel 16

In einem Polymerisationsreaktor wurden 100 T. Wasser, 0,1 T. Natriumhydrogencarbonat, 0,6 T. Tertiärbutylhydroperoxid, 2,0 T. Acrylamid und 5,0 T. PVA vorgelegt. Bei 70 °C wurden 0,1 T. Natriumperoxodisulfat in einer Portion zugegeben und ein Gemisch aus 40 T. Styrol und 60 T. BA in 3 h und eine Lösung von 0,2 T. Natriumformaldehydsulfoxylat in 10 T. Wasser in 5 h dosiert. Nach einer Nachpolymerisationszeit von 2 h wurde eine Dispersion mit einem Feststoffgehalt von 49,3 %, einem pH-Wert von 3,9 und einer Viskosität von 6 500 mPa·s erhalten. Mit der Dispersion wurde ein Film erhalten, der mit Wasser redispergierte.

### Beispiel 17

Das Beispiel 16 wurde wiederholt, jedoch wurden die Tertiärbutylhydroperoxidmenge und die Natriumformaldehydsulfoxylatmenge auf 0,8 bzw. 0,3 T. erhöht. Die erhaltene Dispersion hatte einen Feststoffgehalt von 49,3 %, einen pH-Wert von 5,0 und eine Viskosität von 16 200 mPa·s. Mit der Dispersion wurde ein Film erhalten, der mit Wasser redispergierte.

Das Beispielpaar 16 - 17 zeigt den Einfluß der Initiator/Reduktionsmittel-Mengen auf die Viskosität der Dispersion.

### Beispiel 18

In einem Polymerisationsreaktor wurden 95 T. Wasser, 0,1 T. Natriumhydrogencarbonat, 0,6 T. Tertiärbutylhydroperoxid, 2,0 T. Acrylamid und 5,0 T. PVA vorgelegt. Bei 70 °C wurden 0,1 T. Natriumperoxodisulfat in einer Portion zugegeben und ein Gemisch aus 40 T. Styrol und 60 T. BA in 3 h und eine Lösung von 0,2 T. Natriumformaldehydsulfoxylat in 15 T. Wasser in 5 h dosiert (Polymerisationszeit). Nach einer Nachpolymerisationszeit von 2 h wurde eine Dispersion mit einem Feststoffgehalt von 49,1 %, einem pH-Wert von 4,1, einer Viskosität von 6 600 mPa·s und einem Restmonomergehalt von 927 ppm erhalten. Mit der Dispersion wurde ein Film erhalten, der mit Wasser redispergierte.

### Beispiel 19

Das Beispiel 18 wurde wiederholt, jedoch wurden die Tertiärbutylhydroperoxidmenge und die Natriumformaldehydsulfoxylatmenge auf 0,8 bzw. 0,5 T. erhöht (letztere gelöst in 20 T. Wasser; entsprechend wurde die vorgelegte Wassermenge auf 90 T. erniedrigt), die Polymerisationstemperatur auf 60 °C erniedrigt und die Polymerisationszeit auf 8 h erhöht. Die erhaltene Dispersion hatte einen Feststoffgehalt von 49,5 %, einen pH-Wert von 3,9 eine Viskosität von 4 500 mPa·s und Styrol- und BA-Restgehalte von jeweils < 10 ppm. Mit der Dispersion wurde ein Film erhalten, der mit Wasser redispergierte.

Das Beispielpaar 18 - 19 zeigt, daß mit hohen Initiator/Reduktionsmittel-Mengen, niedriger Polymerisationstemperatur und hoher Polymerisationszeit Dispersionen mit sehr niedrigem Restmonomergehalt erhalten werden können.

## Patentansprüche

1. Verfahren zur Herstellung von schutzkolloidstabilisierten, emulgatorfreien, wäßrigen Kunststoffdispersionen auf Basis von > 50 Massen-% Styrol und/oder (C₁- bis C₈-Alkyl)(meth)acrylat, bezogen auf die gesamten Monomeren, durch semikontinuierliche Polymerisation der Monomeren in wäßriger Phase als Dispersionsmedium in Gegenwart eines wasserlöslichen Polyvinylalkohols, welche durch Verseifung von Polyvinylacetat erhalten werden, einen Polymerisationsgrad im Bereich von 200 bis 2000 (Monomereinheiten im Polymermolekül) und einen Hydrolysegrad im Bereich von 74 bis 99,5 % aufweisen, als Schutzkolloid und eines radikalischen Initiators oder eines aus einem radikalischen Initiator und einem wasserlöslichen Reduktionsmittel bestehenden Initiatorsystems, wobei die Polymerisation in Monomerzulauffahrweise derart durchgeführt wird, daß die gesamte Polyvinylalkoholmenge in die Vorlage gegeben wird und die Hydrophilie und Viskosität derart gesteuert werden, daß
a) Dispersionen mit niedriger Hydrophilie mittels eines Initiatorsystems bestehend aus einem monomerlöslichen (Hydro)peroxid und einem Reduktionsmittel,
oder daß
b) Dispersionen mit hoher Hydrophilie allein mittels eines Initiators aus der Gruppe der Peroxodisulfate oder in Kombination mit einem Initiatorsystem bestehend aus einem monomer löslichen (Hydro)peroxid und einem Reduktionsmittel hergestellt werden.

2. Verfahren nach Anspruch 1,
**dadurch gekennzeichnet,**
**daß** die Polymerisation in Gegenwart eines wasserlöslichen Viskositätsreglers durchgeführt wird.

3. Verfahren nach Anspruch 2,
**dadurch gekennzeichnet,**
**daß** als Viskositätsregler eine niedermolekulare, organische Schwefelverbindung oder eine niedermolekulare, nicht oberflächenaktive Aminoalkoholverbindung eingesetzt wird.

## Claims

1. Process for the preparation of protective-colloid-stabilized, emulsifier-free, aqueous plastic dispersions based on > 50% by mass of styrene and/or (C₁- to C₈-alkyl) (meth)acrylate, relative to the total monomers, by semicontinuous polymerization of the monomers in the aqueous phase as dispersion medium in the presence of a water-soluble polyvinyl alcohol as protective colloid, which are obtained by saponification of polyvinyl acetate and have a degree of polymerization in the range from 200 to 2000 monomer units in the polymer molecule and a degree of hydrolysis in the range from 74 to 99.5%, and of a free-radical initiator or of an initiator system composed of a free-radical initiator and a water-soluble reducing agent, the polymerization being carried out in the monomer feed mode of operation in such a way that the total amount of polyvinyl alcohol is introduced into the receiving vessel and the hydrophilic properties and viscosity are controlled in such a way that
a) dispersions having low hydrophilic properties are prepared by means of an initiator system composed of a monomer-soluble (hydro)peroxide and a reducing agent,
or that
b) dispersions having high hydrophilic properties alone are prepared by means of an initiator from the group comprising the peroxodisulphates or in combination with an initiator system composed of a monomer-soluble (hydro)peroxide and a reducing agent.

2. Process according to Claim 1, **characterized in that** the polymerization is carried out in the presence of a water-soluble viscosity regulator.

3. Process according to Claim 2, **characterized in that** a low-molecular-weight organic sulphur compound or a low-molecular-weight non-surfactant aminoalcohol compound is used as viscosity regulator.

## Revendications

1. Procédé de production de dispersions aqueuses de matières plastiques dépourvues d'agent émulsionnant, stabilisées par un colloïde protecteur, à base de > 50 % en masse de styrène et/ou de (meth)acrylate d'alcoyle en C₁ à C₈, rapporté aux monomères totaux, par polymérisation en semi-continu des monomères en phase aqueuse comme milieu de dispersion en présence d'un alcool polyvinylique soluble dans l'eau comme colloïde protecteur, qui est obtenu par saponification de l'acétate de polyvinyle et qui possède un degré de polymérisation dans la zone de 200 à 2000 (unités de monomères dans la molécule de polymère) et un degré d'hydrolyse dans la zone de 74 à 99,5 %, et d'un promoteur radicalaire ou d'un système de promoteurs formé d'un promoteur radicalaire et d'un agent de réduction soluble dans l'eau, procédé dans lequel la polymérisation est effectuée dans un mode opératoire d'amenée du monomère, de sorte que la quantité totale d'alcool polyvinylique est versée dans le récipient et que l'hydrophilie et la viscosité sont contrôlées afin que :
a) des dispersions ayant une hydrophilie basse sont produites à l'aide d'un système de promoteurs formé d'un (hydro)peroxyde soluble dans les monomères et d'un agent de réduction ou que,
b) de dispersions ayant une hydrophilie élevée sont produites seulement à l'aide d'un promoteur du groupe des peroxodisulfates ou en combinaison avec un système de promoteurs formé d'un (hydro)peroxyde soluble dans les monomères et d'un agent de réduction.

2. Procédé selon la revendication 1,
**caractérisé en ce qu'**
on effectue la polymérisation en présence d'un régulateur de la viscosité soluble dans l'eau.

3. Procédé selon la revendication 2,
**caractérisé en ce que**
comme régulateur de la viscosité, on met en jeu un composé du soufre organique, à bas poids moléculaire ou un composé d'amino-alcool non tensioactif, à bas poids moléculaire.
